# EUROPEAN PATENT SPECIFICATION

(11) **EP 1 335 160 B1**
(45) Date of publication and mention of the grant of the patent: **14.12.2005**
(21) Application number: 03002073.9
(22) Date of filing: 29.01.2003
(51) Int. Cl.: F16K 31/385, F16K 31/40

(54) **Differential pressure valve**
Differenzdruckventil
Soupape à pression différentielle

(30) Priority: 01.02.2002 JP 2002025669; 22.08.2002 JP 2002242085; 19.12.2002 JP 2002367739
(43) Date of publication of application: 13.08.2003
(73) Proprietor: TGK CO., Ltd., Hachioji-shi, Tokyo 193-0942 (JP)
(72) Inventor: Hirota, Hisatoshi, Tokyo 193-0942 (JP); Tsugawa, Tokumi, Tokyo 193-0942 (JP); Inoue, Yuusuke, Tama-shi, Tokyo 206-0822 (JP)
(74) Representative: Grünecker, Kinkeldey, Stockmair & Schwanhäusser Anwaltssozietät

(56) References cited:
- EP-A- 1 069 359
- EP-A- 1 090 786
- DE-B- 1 058 800
- US-A- 6 142 445

## Description

This invention relates to a differential pressure valve.

A known refrigeration cycle e.g. of an automotive air conditioning system condenses or cools high-temperature and high-pressure gaseous refrigerant compressed by a compressor by a condenser or gas cooler, changes the condensed or cooled refrigerant into low-temperature and low-pressure refrigerant by a pressure-reducing device, evaporates the low-temperature refrigerant by an evaporator, separates the evaporated refrigerant into gas and liquid by an accumulator, and returns gaseous refrigerant obtained by the separation to the compressor. As the pressure-reducing device of the system, a differential pressure valve may be used.

When compared with a refrigeration cycle using a Freon substitute as the operating refrigerant, a refrigeration cycle using e.g. carbon dioxide as the operating refrigerant contains much higher refrigerant pressure to be controlled by a solenoid actuated differential pressure valve, and hence a very large solenoid is required when directly controlling a valve element of the valve. Therefore, the differential pressure valve used in such a pressure-reducing device is configured as a pilot-operated flow regulating valve to allow to employ a weaker control solenoid for the pilot valve.

In a conventional pilot-operated differential pressure valve (JP 2001-27355 A) high-pressure refrigerant on an inlet side is guided to a main valve and a solenoid actuable pilot valve. The pressure controlled by the pilot valve is introduced into a pressure chamber containing a piston operating a main valve element via a valve hole of a main valve from the downstream side of the main valve while permitting a very small amount of refrigerant to flow via an orifice from the piston to the downstream side of the main valve. The valve travel of the pilot valve is determined by a spring contained in the solenoid. The value of electric current energizing the solenoid adjusts a differential pressure across the main valve. The main valve of the differential pressure valve controls the flow rate of the refrigerant such that the differential pressure between an inlet and an outlet becomes equal to the set differential pressure.

In conventional expansion valves the refrigerant inlet and outlet are fixed since the refrigerant circulates in the refrigeration cycle in one fixed direction. In recently developed automotive vehicles, however, engines with improved combustion efficiency do not generate sufficiently high temperature of the engine coolant to use the coolant as the only heat source for heating. To overcome this problem, the automotive air conditioning system is a heat pump-type air conditioning system capable of selectively performing cooling and heating operations. During cooling operation high-temperature and high-pressure refrigerant supplied from a compressor flows through an external heat exchanger, changes into low-temperature and low-pressure refrigerant by an expansion valve, and flows through an internal heat exchanger within a compartment. During heating operation the high-temperature and high-pressure refrigerant from the compressor is directly supplied to the internal heat exchanger within the compartment, and then flows through the expansion valve. This needs to change the flow direction of refrigerant at least through the expansion valve. If a differential pressure valve designed for one direction flow is used as the expansion valve, two pairs of differential pressure valves and check valves have to be arranged in parallel to enable bi-directional flow of the refrigerant. In conventional differential pressure valves, however, the main valve element is actuated by the piston arranged on the downstream side of the main valve and operated by the pilot valve. Means for transmitting a driving force of the piston via the valve hole of the main valve is necessary. This results in a complicated construction of the differential pressure valve.

Further, in the heat pump-type air conditioning system (cooling and heating operations) two pairs of differential pressure valves are required for causing respective independent expanding actions for the cooling and heating operations. The design increases the manufacturing costs of the system.

It is an object of the present invention to provide a differential pressure valve simplified in construction.

Another object of the invention is to provide a differential pressure valve capable of coping with bi-directional flow of refrigerant for use as an expansion valve of a heat pump-type air conditioning system.

To solve the above problems, the present invention provides a pilot-operated differential pressure valve according to claim 1.

In this differential pressure valve, the restricted passage in the refrigerant passage in which the pilot valve is arranged is formed in the piston on the upstream side of the pilot valve. The pilot valve then can control refrigerant whose pressure has been reduced by the restricted passage. This makes it possible to arrange the piston on a side where the main valve element is located, and to integrally form the piston with the main valve element. This allows to avoid with a member for transmitting the motion of the piston to the main valve element, and results in a simplification of the construction of the differential pressure valve

According to a further aspect of the present invention first and second check valves are arranged between a first port and the first chamber and between a second port and the first chamber, respectively, for permitting the fluid to flow from the first port and the second port to the first chamber, and third and fourth check valves are arranged between the first port and the third chamber and between the second port and the third chamber, respectively, for permitting the fluid to flow from the third chamber to the first port and the second port, whereby the fluid can be caused to flow bi-directionally.

When fluid is introduced into the first port, the pressure of the fluid causes the first check valve to be opened to close the second check valve, and at the same time causes the third check valve to be closed to open the fourth check valve. Therefore, the fluid is caused to flow into the second port through the first check valve, the pilot-operated differential pressure valve, and the fourth check valve. Inversely, when fluid is introduced into the second port, the pressure of the fluid causes the first check valve to be closed to open the second check valve, and at the same time causes the third check valve to be opened to close the fourth check valve. Therefore, the fluid is caused to flow into the first port through the second check valve, the pilot-operated differential pressure valve, and the third check valve. Thus, by adding the four check valves to the differential pressure valve, when the fluid is introduced into either of the first port and the second port, the pressure of the introduced fluid switches the open and close conditions of the first to fourth check valves, to cause the fluid to flow through the pilot-operated differential pressure valve only in one fixed direction. This results in a single differential pressure valve capable of coping with bi-directional flow of fluid, and allows to apply the pressure differential valve to an expansion valve for a heat pump-type air conditioning system without increasing the costs of the system.

Furthermore, in the differential pressure valve according to the present invention, no flexible member exists in pressure-receiving portions. Hence, the diameter of a main valve can be increased in size. Therefore, the differential pressure valve is especially useful in effecting stable control of refrigerant which operates under very high differential pressure and flows at high flow rates, as in a case where the valve is applied to a pressure-reducing device of an automotive air conditioning system that uses carbon dioxide as refrigerant.

Further, when a main valve, a piston, and a pilot valve are arranged on the same axis, an adjusting screw for adjusting the load of a spring urging the main valve and piston integrally formed with each other in a valve-closing direction is arranged within a body at a location between a chamber on a back pressure side of the piston and the pilot valve. This makes an external seal unnecessary, so that the reliability of the valve against the external leakage of refrigerant therefrom can be enhanced. The adjusting screw needs not have a portion for arranging a seal member thereat or enhance pressure resistance by increasing the number of screw threads thereof. Therefore, the axial dimension of the adjusting screw can be shortened.

Embodiments of the present invention will be described with reference to drawings. In the embodiments a differential pressure valve is applied to an expansion valve used e.g. as a pressure-reducing device in a refrigeration cycle of an electronically controlled automotive air conditioner. In the drawings is:
- Fig. 1: a longitudinal sectional view of a differential pressure valve (first embodiment),
- Fig. 2: a cross-sectional view taken on line a-a of FIG. 1,
- Fig. 3: a diagram showing a change in differential pressure set to a pilot valve relative to the value of a solenoid current,
- Fig. 4: a diagram showing changes in a flow rate of refrigerant relative to set differential pressures, which occur in accordance with changes of a spring constant,
- Fig. 5 (A),5(B): views of valve angles of a main valve,
- Fig. 6(A),6(B): views of valve angles of a pilot valve,
- Fig. 7: a diagram showing changes in a flow rate of refrigerant relative to set differential pressures, which occur in accordance with changes in a valve angle,
- Fig. 8: a longitudinal sectional view of another differential pressure (second embodiment),
- Fig. 9: a longitudinal sectional view of another differential pressure valve (third embodiment),
- Fig. 10(A), 10(B): cross-sectional views along lines b-b and c-c of essential elements of the Fig. 9 differential pressure valve,
- Fig. 11 (A), 11 (B): views explaining the operations of the differential pressure valve according to Fig. 9 for first and second flow directions,
- Fig. 12: a longitudinal section view of another differential pressure valve (fourth embodiment),
- Fig. 13: a cross-sectional view taken on the line d-d of Fig. 12, and
- Fig. 14(A), 14(B): cross-section views showing a flow-path switching mechanism of the differential pressure valve of Fig. 13.

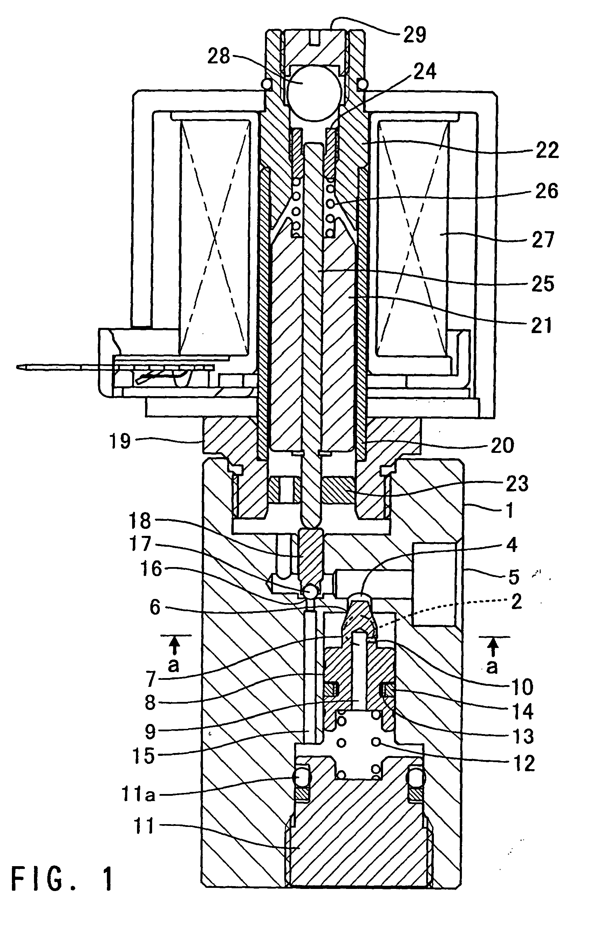

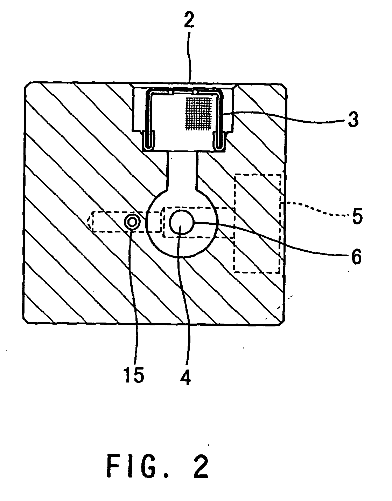

The differential pressure valve according to Figs 1 and 2 has an inlet port 2 in a side of a body 1. The inlet port 2 extends perpendicularly to the drawing plane of Fig. 1 and receives high-pressure refrigerant. In Fig. 2 inlet port 2 contains a strainer 3. The inlet port 2 communicates with an outlet port 5 via a refrigerant passage 4. In an intermediate portion of the refrigerant passage 4, a main valve seat 6 is integrally formed with the body 1. A main valve element 7 is arranged opposed to the main valve seat 6 from the upstream side. Main valve seat 6 and main valve element 7 form a main valve. The main valve element 7 is integrally formed with a piston 8 which can move forward and backward in directions in which the main valve element 7 moves toward and away from the main valve seat 6. The piston 8 and the main valve seat 6 define a chamber into which refrigerant is introduced from the inlet port 2. The piston 8 has a central axial refrigerant passage 9 which is open in a lower end face of the piston 8. The refrigerant passage 9 communicates with an orifice 10 which laterally extends through the main valve element 7. The refrigerant passage 9 and the orifice 10 form a restricted passage which allows high-pressure refrigerant from the chamber formed on an upper side of the piston 8 to flow into a space or chamber formed on a lower side of the piston 8, which lower chamber is closed by an adjusting screw 11 screwed into body 1. A spring 12 for urging the piston 8 in a main valve-closing direction is arranged between the piston 8 and the adjusting screw 11. The adjusting screw 11 allows to adjust the load of the spring 12. An 0-ring 11a provides a sealing to the outside. In an outer periphery of the piston 8 a groove is circumferentially formed receiving a tension ring 13 and a backup ring 14. The tension ring 13 pushes the backup ring 14 against an inner wall of a cylinder in which the piston 8 is received, thereby increasing the sliding resistance of the piston 8. The increased sliding resistance suppresses generation of noise due to vibrations occurring when the main valve quickly opens and closes with a very small valve travel, and prevents leakage along the piston 8.

A chamber formed by the piston 8 and the adjusting screw 11 communicates via a refrigerant passage 15 formed in the body 1 with a chamber on the downstream side of the main valve that is, a chamber communicating with the outlet port 5. A pilot valve seat 16 is formed at a location between the refrigerant passage 15 and the chamber. A ball-shaped pilot valve element 17 is arranged opposed to the pilot valve seat 16 on the downstream side (pilot valve 16, 17). The pilot valve element 17 is supported by an axially movable shaft 18.

A solenoid for controlling the pilot valve is arranged at an upper portion of the body 1. The solenoid comprises a cap 19 screwed into an upper end of the body 1, a sleeve 20 rigidly fitted in the cap 19, a plunger 21 axially arranged in the sleeve 20 such that it can move forward and backward therein, a core 22 rigidly fitted in an upper end of the sleeve 20 to close the sleeve 20, a shaft 25 axially arranged through the plunger 21 and having a lower end thereof supported by a bearing 23 press-fitted in the cap 19 and an upper end thereof supported by an adjusting screw 24 screwed into a hole axially formed through the core 22, a spring 26 between the plunger 21 and the adjusting screw 24, for urging the shaft 18 holding the pilot valve element 17 via the shaft 25 in the direction of closing of the pilot valve, and a solenoid coil 27 arranged outside the sleeve 20. The adjusting screw 24 allows to adjust the load of the spring 26. The plunger 21 outer peripheral surface does not contact the inner wall of the sleeve 20. This is achieved by supporting the shaft 25 by two-point supports at opposite ends thereof with the bearing 23 and the adjusting screw 24. This reduces the sliding resistance of the plunger 21. A central hole of the core 22 into which the adjusting screw 24 is screwed is closed by a ball 28. The ball 28 is retained by a screw 29 screwed into an upper end opening of the core 22.

When the solenoid coil 27 is not energized and no refrigerant is introduced into the inlet port 2 (Fig. 1), the main valve element 7 is kept seated on the main valve seat 6 by the spring 12 (closed state). The pilot valve element 17 is kept seated on the pilot valve seat 16 by the spring 26 (pilot valve closed state).

When high-pressure refrigerant is introduced into the inlet port 2, the refrigerant is guided into the chamber above the piston 8. The piston 8 has a larger pressure-receiving area than the main valve element 7. The acting pressure moves the piston 8 downward counter to spring 12. The main valve opens. The refrigerant flows through the main valve into the chamber communicating with the outlet port 5.

The refrigerant introduced into the chamber above the piston 8 also reaches the chamber below the piston 8 via the orifice 10 and the refrigerant passage 9, and further is supplied to the pilot valve via the refrigerant passage 15. Since the pilot valve is closed, the pressure in the chamber below the piston 8 gradually increases, which causes the piston 8 to move upward and to close or throttle the main valve.

As soon as the pressure in the chamber below the piston 8 becomes so high that a differential pressure across the pilot valve exceeds a predetermined value, the refrigerant pushes open the pilot valve element 17 and flows into a space communicating with the outlet port 5. Since this flow reduces the pressure in the chamber below the piston 8, the piston 8 is moved downward so that the flow rate of refrigerant to the outlet port 5 is increased.

The refrigerant exiting into the outlet port 5 reduces the pressure on the upstream side of the main valve, and also the pressure supplied to the pilot valve, so that the pilot valve element 17 moves in a valve-closing direction.

This increases the pressure in the chamber below the piston 8 which moves upward. The main valve reduces the flow rate of refrigerant to increase the pressure of refrigerant on the upstream side of the main valve. The above operations are repeatedly carried out to thereby control a differential pressure across the main valve to a fixed value. The differential pressure across the main valve at this time is determined by the load of the spring 26.

As soon as the solenoid coil 27 is energized, the plunger 21 is attracted toward the core 22, and the spring force of the spring 26 urging the pilot valve element 17 in the valve-closing direction is reduced to decrease the differential pressure set for the pilot valve. When the value of an electric current energizing the solenoid coil 27 is increased, a force for attracting the plunger 21 to the core 22 is increased, whereby it is possible to further decrease the set differential pressure for the pilot valve, that is, the differential pressure across the differential pressure valve.

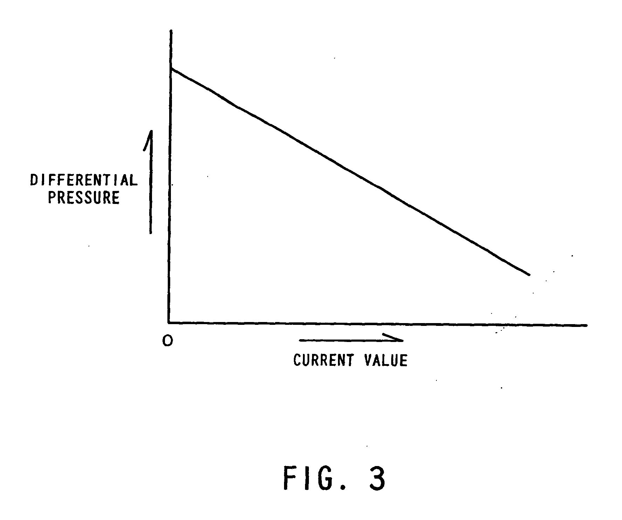

In Fig. 3, the abscissa indicates the value of an electric current supplied to the solenoid coil 27, and the ordinate indicates the set differential pressure for the differential pressure valve.

By increasing the value of the electric current the force for attracting the plunger 21 to the core 22 is increased to act on the spring 26 in the direction of weakening or reducing the spring force. This allows to set the differential pressure to a small value. Inversely, as the value of the electric current decreases, the differential pressure can be set to a larger value. With the value "zero" of the electric current the set differential pressure becomes the maximum. The differential pressure across the differential pressure valve can be set such that it is proportionally changed depending on the value of the electric current for the solenoid coil 27.

When the differential pressure valve is employed as an expansion valve in a refrigeration cycle of an automotive air conditioning system, it is necessary to modify the essential operational characteristic of the differential pressure valve such that the differential pressure across the valve is controlled to a constant level irrespective of the flow rate of refrigerant, depending on the method of controlling the compressor in the refrigeration cycle. The refrigeration cycle of an automotive air conditioning system mainly comprises a compressor, a condenser or a gas cooler, an expansion valve, an evaporator, and an accumulator. The compressor and the expansion valve each control the flow rate of refrigerant. For a variable displacement compressor, to control the flow rate of refrigerant, an electronic control valve is sometimes used which performs differential pressure control such that the difference between the discharge pressure and the suction pressure of the compressor remains constant irrespective of the flow rate of the refrigerant. When such a differential pressure control is employed for the variable displacement compressor, the use of the differential pressure valve as the expansion valve requires some consideration.

More specifically, when differential pressure controls are carried out for both of the variable displacement compressor and the expansion valve, respectively, there exists the possibility of occurring conflict between the two controls. Although the controls do not conflict with each other as long as target differential pressures set to the variable displacement compressor and the expansion valve are identical, it is sometimes impossible to reliably control the expansion valve if the target differential pressures are different from each other. Pressure losses in the condenser or the gas cooler, the evaporator, and the accumulator can be disregarded. In this case, it is possible to consider that the discharge pressure of refrigerant discharged from the variable displacement compressor and the pressure of refrigerant at an inlet of the expansion valve are substantially equal to each other. The pressure of refrigerant discharged from an outlet of the expansion valve and the pressure of refrigerant at an inlet of the variable displacement compressor are substantially equal to each other. Therefore, e.g. in a case where a differential pressure set to the expansion valve is lower than a differential pressure set to the variable displacement compressor, the expansion valve is always fully opened, and in an opposite case, the expansion valve is always fully closed. In these cases, it is possible to prevent the expansion valve from becoming uncontrollable, by modifying the essential characteristic of the differential pressure valve such that the differential pressure across the expansion valve remains unchanged in spite of a change in the flow rate of refrigerant.

There are four methods of modifying the mentioned essential characteristic of the differential pressure valve. A first one is a method of changing a spring constant in the main valve, a second one is a method of changing the valve angle of the main valve, a third one is a method of changing a spring constant in the pilot valve, and a fourth one is a method of changing the valve angle of the pilot valve.

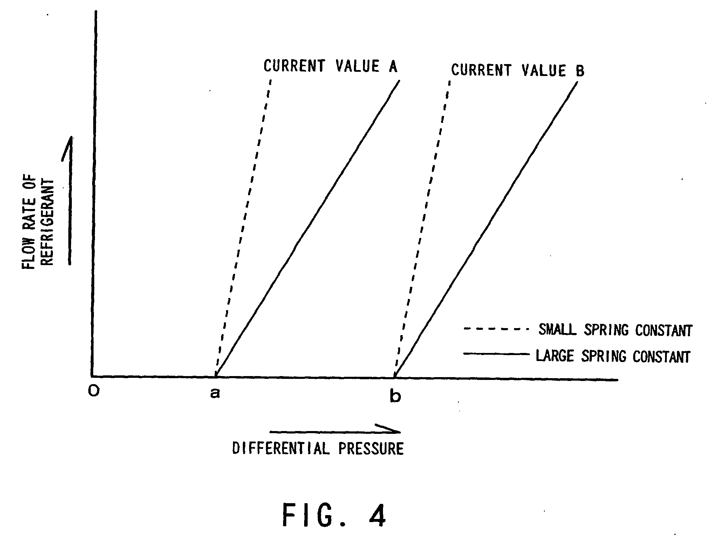

In Fig. 4, the abscissa indicates the set differential pressure, and the ordinate indicates the flow rate of refrigerant. The differential pressure valve has a characteristic of maintaining the set differential pressure at a constant level irrespective of changes in the flow rate of refrigerant. For instance, when the value of an electric current flowing through the solenoid is set to an electric current value A and the differential pressure is set to a, the differential pressure is maintained substantially constant even when the flow rate of refrigerant changes, as shown by a dotted line in Fig. 3. The differential pressure-flow rate characteristic curve remains the same even when the value of the solenoid current is changed. For instance, also when the value of the solenoid current is set to a smaller electric current value B and the differential pressure is set to b, the same characteristic can be obtained. Thus, the differential pressure valve functions as a constant differential pressure valve. Actually, the differential pressure-flow rate characteristic curve is slightly inclined, since the spring constant of the spring 12 urging the main valve element 7 in a valve-closing direction cannot be reduced to "0", and an effective pressure-receiving area of the main valve element 7 changes as the main valve is opened. The differential pressure valve having the constant differential pressure characteristic can be applied as it is, when the control of the variable capacity compressor is executed by a control method other than the differential pressure control, e.g. by a flow rate control, since no conflict then will occur between the control operation.

On the other hand, in a case of a system which controls the variable displacement compressor by the differential pressure control, the spring 12 urging the main valve element 7 in a valve-closing direction thereof has a spring constant thereof set to a larger value. As a result, as shown by solid lines in Fig. 4, the characteristic curve come to be largely inclined. More specifically, the differential pressure valve is configured to have a characteristic such that when the flow rate of refrigerant is increased, the differential pressure across the differential pressure valve becomes larger than a differential pressure set by the value of the solenoid current. When such a differential pressure valve is used as the expansion valve, the differential pressure-flow rate characteristic curve of a flow rate control valve for controlling the variable displacement compressor and that of the differential pressure valve are not parallel but intersect with each other. Accordingly, the differential pressure valve comes to perform control in a manner setting toward the point of the intersection, and hence it becomes possible to effect stable control of the system.

This characteristic of the differential pressure across the differential pressure valve becoming larger than a differential pressure set by the value of the solenoid current with an increase in the flow rate of refrigerant, in short, the characteristic of the inclination of the characteristic curve becoming larger, can be also realized by setting the spring constant of the spring 26 urging the pilot valve element 17 to a large value.

Further, the inclination of the characteristic curve of the differential pressure valve can be also changed by changing the valve angles of the main valve and the pilot valve, as described hereinbefore.

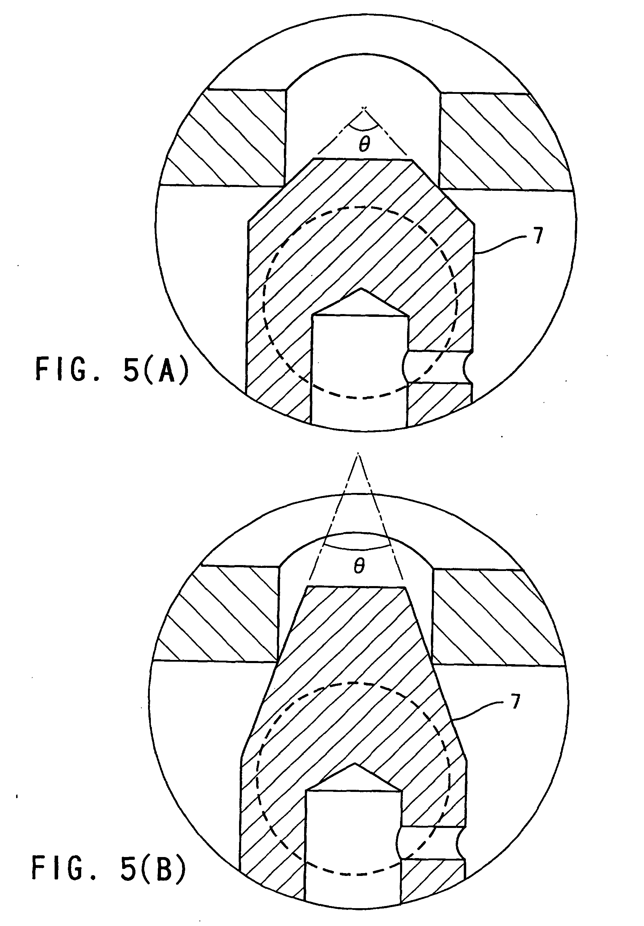

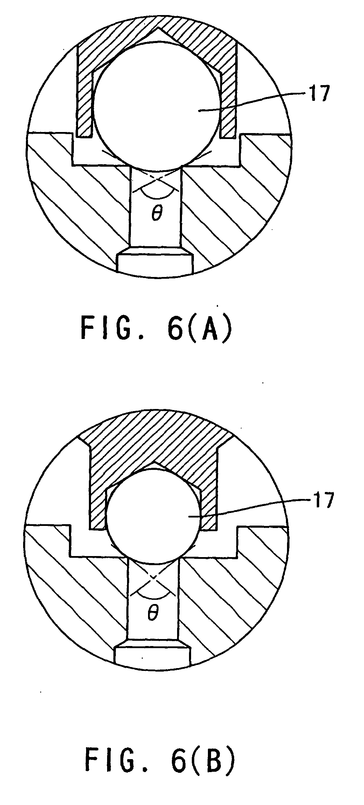

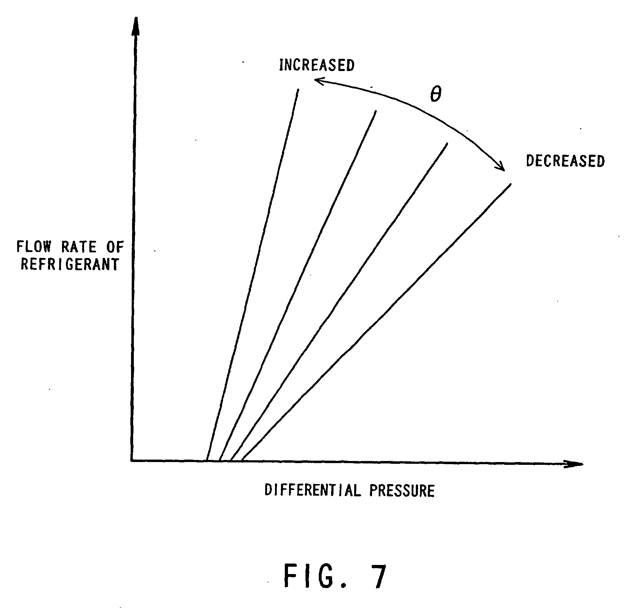

Fig. 5 (A) shows an example of the main valve having a large main valve element valve angle θ, and Fig. 5 (B) shows an example of the main valve having a small valve angle θ. Fig. 6 (A) shows an example of the pilot valve having a large pilot valve element valve angle θ, and Fig. 6 (B) shows an example of the pilot valve having a small valve angle θ. FIG. 7 shows changes in the flow rate of refrigerant relative to set differential pressures, which occur in accordance with variations of the respective valve angle.

As to the main valve, when the valve angle θ of the main valve element 7 at an end thereof co-acting with the main valve seat 6 is large as shown in Fig. 5 (A), the differential pressure across the differential pressure valve is not largely changed by an increase in the flow rate of refrigerant, as shown in FIG. 7. However, as shown in Fig. 5 (B), when the valve angle θ is decreased, the differential pressure across the differential pressure valve is increased with an increase in the flow rate of refrigerant, as shown in Fig. 7 and the characteristic curve of the differential pressure valve comes to be largely inclined. This is because even if the valve element 7 is moved by the same lift amount, the rate of change in the lift amount is small.

As described above, the characteristic of the differential pressure valve is changed by the change in the valve angle of the main valve. The pilot valve also exhibits the same tendency. In the pilot valve, when the valve angle θ of the pilot valve element 17 is large due to a large diameter of the ball of the pilot valve element 17 in relation e.g. to the given diameter of the pilot valve seat 16 and as shown in Fig. 6 (A), the differential pressure across the differential pressure valve is not largely changed with an increase in the flow rate of refrigerant, as shown in Fig. 7. However, when the diameter of the ball is decreased to decrease the valve angle θ in relation to the diameter of the pilot valve seat 16 and as shown in Fig. 6 (B), the characteristic curve of the differential pressure valve comes to be largely inclined as shown in Fig. 7.

By increasing the spring constant of the spring 12 of the main valve, and/or by decreasing the valve angle θ of the same, and/or by increasing the spring constant of the spring 26 of the pilot valve, and/or by decreasing the valve angle θ of the same, it is possible to adjust the differential pressure characteristic of the differential pressure valve such that control of the variable displacement compressor and control of the differential pressure valve do not conflict with each other.

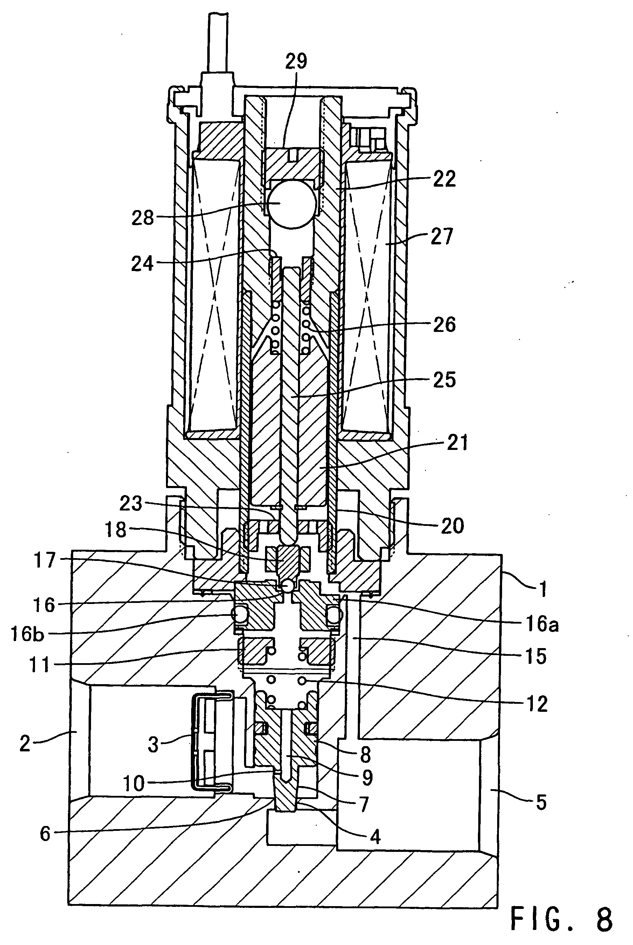

The differential pressure valve according to Fig. 8 is similar to the differential pressure valve of Fig. 1 because the pilot valve 16, 17 is arranged in an intermediate portion of a refrigerant passage extending from a chamber on a back pressure side of the piston 8 (integrally formed with a main valve element 7) to the outlet port 5. The differential pressure across the main valve 6, 7 is controlled to a constant value set by the pilot valve 16, 17, but differs in that the location of the pilot valve 16, 17 is changed such that the main valve 6, 7 and the pilot valve 16, 17 are arranged on the same axis.

The main valve element 7 and the piston 8 integrally formed with each other' are arranged such that the main valve element 7 is directed downward as viewed in the figure, for opening and closing the refrigerant passage 4 through main valve seat 6 between the inlet port 2 and the outlet port 5. The spring 12 urges the main valve element 7 and the piston 8 in a valve-closing direction. The adjusting screw 11 is arranged above the main valve element 7. A plug 16a is arranged above the adjusting screw 11. This plug 16a forms the pilot valve seat 16 and a guide both integrally formed therewith. The guide movably supports the shaft 18 holding the pilot valve element 17. An O-ring 16b seals between the body 1 and the plug 16a. A space upward of the pilot valve seat 16 communicates via the refrigerant passage 15 with the outlet port 5. The solenoid having the same construction as in first embodiment is arranged upward of the shaft 18.

The passage through which refrigerant passes has no intermediate portion sealed from the outside. There and is no fear of leakage to the exterior. The differential pressure valve of the second embodiment has no sealing member like O-ring 11 a in Fig. 1. The O-ring 16b provided around the plug 16a has not to a seal against leakage of refrigerant to the outside, but has to seal against internal leakage only.

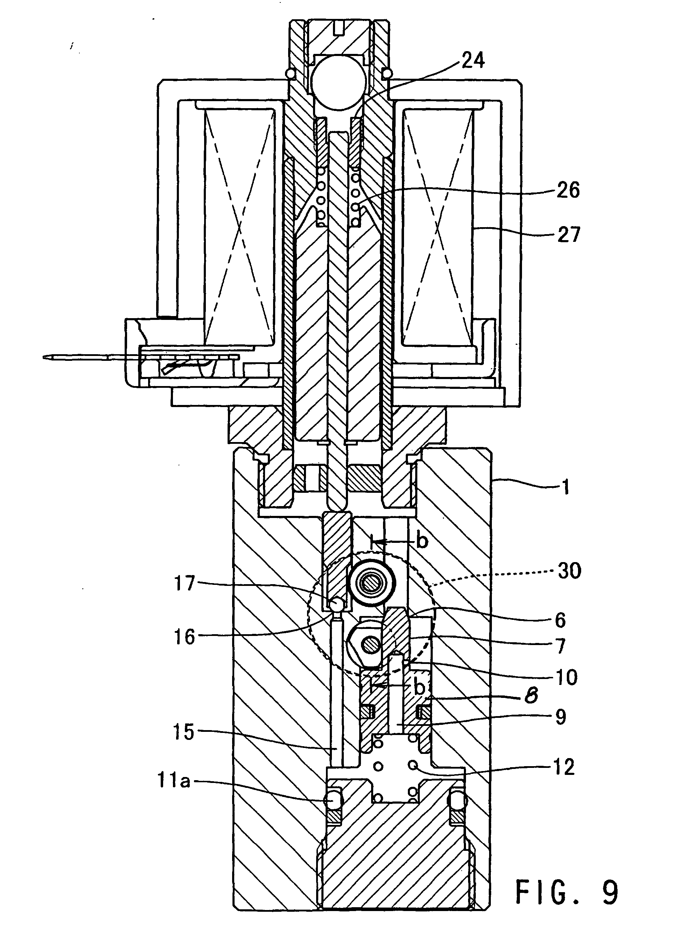

The operation of the differential pressure valve of the second embodiment is the same as that of the first embodiment. The differential pressure valve is useful for air conditioning in which refrigerant flows only in one direction. If the differential pressure valve (first or second embodiment) is to be employed in a heat pump-type air conditioning system, where the direction of refrigerant flow is reversed for the heating and cooling operations, two pairs of such differential pressure valves and check valves are necessary. This inconvenience is eliminated by the third embodiment of Figs 9, 10(A), 10(B), 11 (A), 11(B) which enables a single differential pressure valve alone to cope with bi-directional flow of refrigerant.

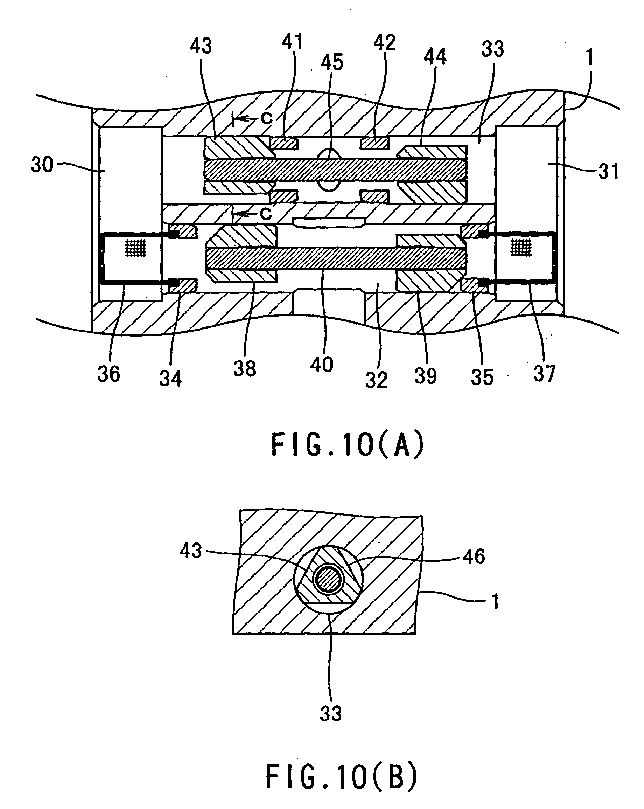

The differential pressure valve in Fig. 9, Fig. 10(A), Fig. 10(B) has the body 1 and first and second ports 30, 31 which form a refrigerant inlet and a refrigerant outlet, respectively. A flow path-switching mechanism is arranged between the ports 30, 31, for switching the direction of flow of refrigerant introduced from different directions of flow, such that the refrigerant flows through the main valve 6, 7 and the pilot valve 16, 17 in one direction. In Fig. 10(A), an inlet refrigerant passage 32 and an outlet refrigerant passage 33 are formed in a manner connecting between the first and second ports 30, 31.

The inlet refrigerant passage 32 has valve seats 34, 35 arranged in both ends thereof. The valve seats 34, 35 have strainers 36, 37 fitted therein on the respective sides of the first and second ports 30, 31. Opposed to the valve seats 34, 35, valve elements 38, 39 connected to each other by a shaft 40 are arranged, respectively, such that they can move toward and away from the respective valve seats 34, 35 from inside. Thus, the valve elements 38, 39, and the valve seats 34, 35 form two check valves interlocked with each other to perform respectively reverse operations, for permitting refrigerant to flow inwardly from the opposite outsides of the inlet refrigerant passage 32, respectively. A space between the valve elements 38, 39 communicates with a chamber on the upstream side of a main valve 6, 7 defined by the main valve element 6, the main valve seat 7 and the piston 8.

The outlet refrigerant passage 33 has valve seats 41, 42 arranged therein at locations close to a central portion thereof. In a manner opposed to the valve seats 41, 42, valve elements 43, 44 connected to each other by a shaft 45 are arranged respectively, such that they can move toward and away from the respective valve seats 41, 42 from outside. Thus, the valve elements 43, 44, and the valve seats 41, 42 form two check valves interlocked with each other to perform respectively reverse operations, for permitting refrigerant to flow from the inside of the outlet refrigerant passage 33 to the opposite outsides thereof, respectively. A space between the valve seats 41, 42 communicates with a space on the downstream side of the main valve 6, 7 and the pilot valve 16, 17.

As shown in Fig. 10(B) for valve element 43 the valve elements 38, 39, and the valve elements 43, 44 each have e.g. three cut-away portions 46 at the outer periphery to form refrigerant passages, whereby the refrigerant passage on the downstream side of each check valve when it is open is secured.

When a solenoid coil 27 is not energized and refrigerant is not introduced into the first port 30 or the second port 31 in Fig. 9, the main valve element 7 is kept seated on the main valve seat 6 by spring 12 (main valve closed state) The pilot valve element 17 as well is seated on the pilot valve seat 16 by spring 26 (pilot valve closed state).

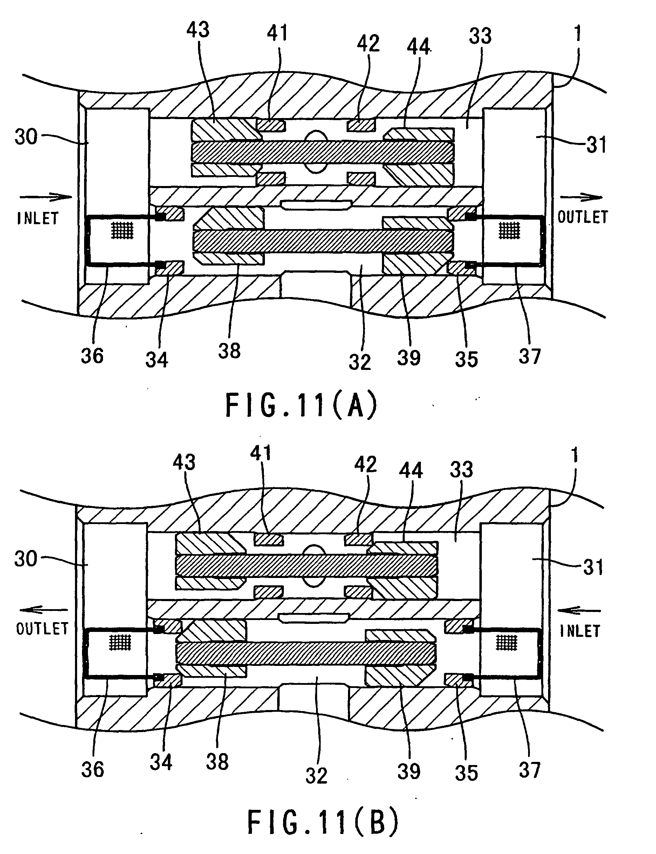

Now, for instance, when high-pressure refrigerant is introduced into the first port 30, as shown in Fig. 11 (A) the valve elements 38, 43 are pushed by the pressure rightward. The valve element 38 arranged in the inlet refrigerant passage 32 moves away from the valve seat 34, and the valve element 39 is seated on the valve seat 35. At the same time, the valve element 43 in the outlet refrigerant passage 33 is seated on the valve seat 41 and the valve element 44 moves away from the valve seat 42. The space in the central portion of the inlet refrigerant passage 32 communicates with the first port 30, and is disconnected from the second port 31. The space in the central portion of the outlet refrigerant passage 33 is disconnected from the first port 30 and communicates with the second port 31.

Refrigerant flowing from the first port 30 into the inlet refrigerant passage 32 by pushing open the check valve on the first port side of the inlet refrigerant passage 32, passes through the refrigerant passages formed by the cut-away portions 46 formed at the periphery of the valve element 38, into the space defined between the valve elements 38, 39, and thereafter enters the chamber on the upstream side of the main valve 6,7. Refrigerant also is supplied to the pilot valve 16, 17 via the orifice 10 and the refrigerant passages 9, 15. When the resulting differential pressure across the pilot valve exceeds a predetermined value, the refrigerant pushes open the pilot valve element 17, and flows into the space defined between the valve seats 41, 42 in the central portion of the outlet refrigerant passage 33. Since this reduces pressure in a chamber below the piston 8, the piston 8 is moved downward, and the main valve element 7 is moved away from the main valve seat 6 to open the main valve whereby the refrigerant introduced into the inlet port 2 flows out into the space between the valve seats 41, 42 in the outlet refrigerant passage 33. Further, the refrigerant flows out into the second port 31 through the check valve whose valve element 44 is moved away from the valve seat 42, and the refrigerant passages formed by the cut-away portions 46 of the valve element 44.

When the flow into the outlet port 5 reduces the pressure on the upstream side of the main valve 6, 7, the pressure of refrigerant supplied to the pilot valve 16, 17 is also reduced. The pilot valve element 17 moves in a valve-closing direction. This causes a pressure increase in the chamber below the piston 8. The piston 8 moves upward, and the main valve element 7 is urged accordingly in a valve-closing direction. The main valve reduces the flow rate to thereby increase the pressure on the upstream side of the main valve. The above operations are repeatedly carried out to thereby control a differential pressure across the main valve to a fixed value. The differential pressure across the main valve at this time, in other words, a maximum differential pressure set to the pilot valve when the solenoid is not energized is determined by the load of the spring 26. This load is set or adjusted by the adjusting screw 24.

Next, when high-pressure refrigerant is introduced into the second port 31, as shown in Fig. 11 (B) the refrigerant pushes the valve element 44 in the outlet refrigerant passage 33 on the valve seat 42. At the same time, the refrigerant flowing into the inlet refrigerant passage 32 pushes the valve element 39 away from the valve seat 35. This causes the other valve element 43 in the outlet refrigerant passage 33 to move away from the valve seat 41 with the seating of the valve element 44. The space in the central portion of the outlet refrigerant passage 33 communicates with the first port 30. The other valve element 38 in the inlet refrigerant passage 32 is seated on the valve seat 34 while the valve element 39 clears the valve seat 35. The space in the central portion of the inlet refrigerant passage 32 is disconnected from the first port 30.

As a result, the refrigerant flowing from the second port 31 into the inlet refrigerant passage 32 by opening the check valve on the second port side, enters the chamber on the upstream side of the main valve 6, 7, and is supplied to the pilot valve 16, 17 via the orifice 10 and the refrigerant passages 9, 15. When the differential pressure across the pilot valve 16, 17 exceeds a predetermined value, the refrigerant pushes open the pilot valve element 17, and flows into the first port 30 through the space in the central portion of the outlet refrigerant passage 33, and the check valve on the first port side. This reduces the pressure in the chamber below the piston 8, so that the piston 8 is moved downward, and the main valve element 7 is moved away from the main valve seat 6 whereby the refrigerant flows out into the first port 30 through the space in the central portion of the outlet refrigerant passage 33, and the check valve on the first port side. The following operations are the same as those carried out when the high-pressure refrigerant is introduced into the first port 30.

When the solenoid coil 27 is energized, the plunger 21 is attracted toward the core 22. The spring force of spring 26 urging the pilot valve element 17 in the valve-closing direction is reduced. This decreases the differential pressure set for the pilot valve. When the value of the electric current for the solenoid coil 27 is increased, the force attracting the plunger 21 toward the core 22 is increased. This allows to further decrease the differential pressure set for the pilot valve, that is, the differential pressure across the differential pressure valve.

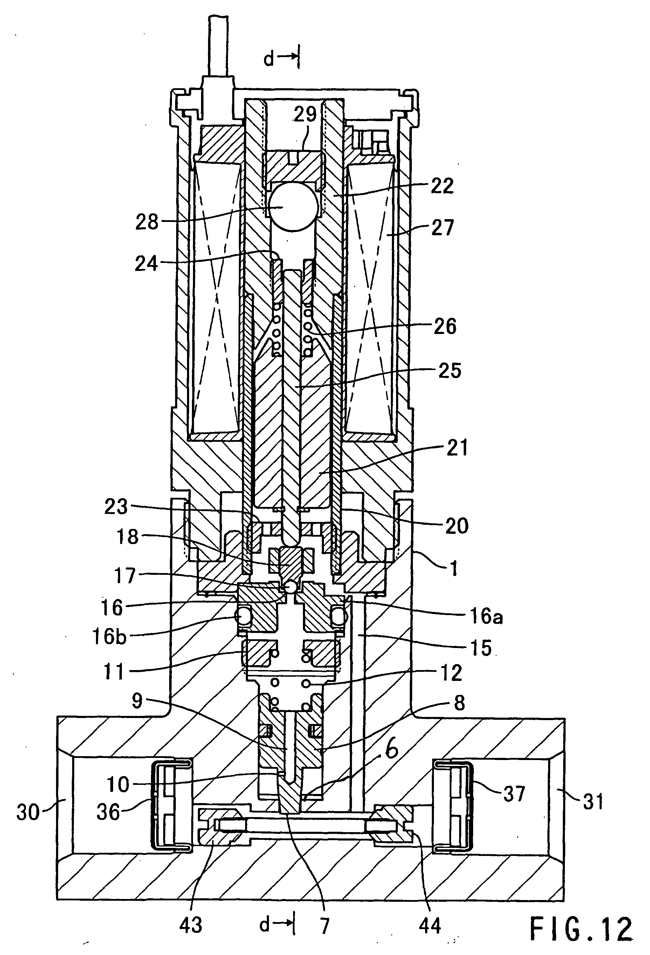

The differential pressure valve of the fourth embodiment of Figs. 12, 13, 14(A), 14(B) is configured similarly to the second embodiment with the main valve and the pilot valve arranged on the same axis, and with a flow path-switching mechanism as in the third embodiment for enabling bi-directional flow of refrigerant.

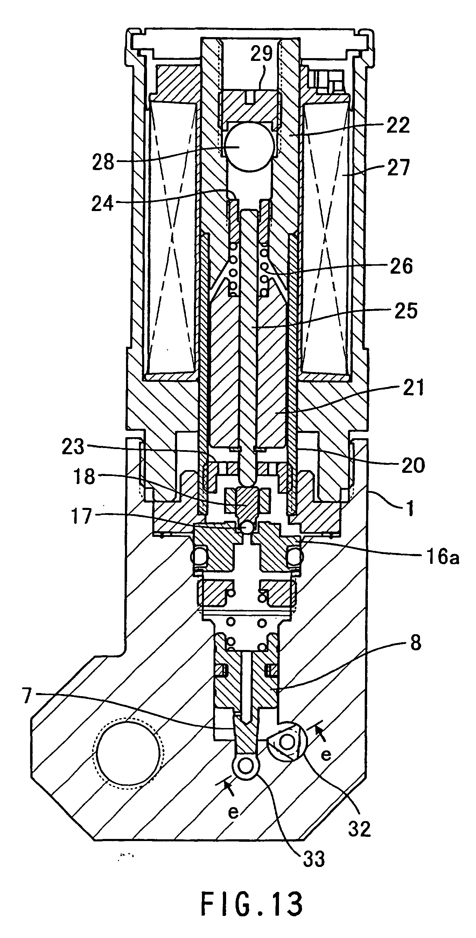

The flow path-switching mechanism is arranged obliquely with respect to the axis of the pilot valve 16, 17. As shown in Figs. 12 and 13, the outlet refrigerant passage 33 contains two check valves for selectively causing refrigerant having passed through the main valve 16, 17 to flow to the first port 30 or the second port 31, arranged below a port of the main valve seat 6 of the main valve. An inlet refrigerant passage 32 is provided containing two check valves for switching the flow path of refrigerant such that refrigerant introduced from the first port 30 or the second port 31 is caused to flow to a chamber on an upstream side of the main valve 6, 7. Passage 32 is arranged obliquely upward of the outlet refrigerant passage 33.

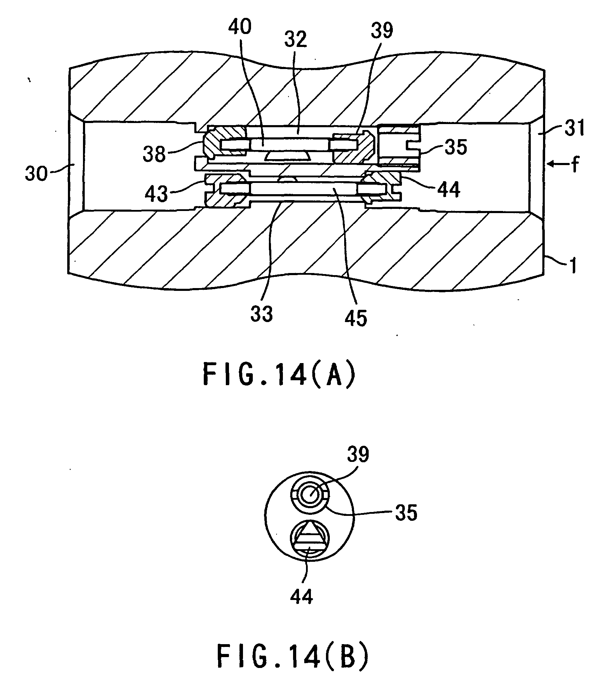

Fig. 14(A) shows a cross-section of this flow path-switching mechanism taken on a plane extending through the respective axes of the inlet refrigerant passage 32 and the outlet refrigerant passage 33. In the inlet refrigerant passage 32, a valve seat associated with a valve element 38 on the first port side is integrally formed with the valve body 1. The valve seat 35 associated with the valve element 39 on the second port side is formed by a member having a screw-fit or a press-fit construction. The valve elements 38, 39 are coupled to the shaft 40 by screw-fitting in advance and are inserted into the inlet refrigerant passage 32, before then the valve seat 35 is mounted. Further, one valve element 43, for instance, in a state coupled to the shaft 45 by screw-fitting in advance, is inserted into the outlet refrigerant passage 33. Then the other valve element 44 is coupled to the shaft 40, whereby the valve elements 43, 44 are mounted in the outlet refrigerant passage 33. The valve elements 38, 39, 43, 44 are each formed to have e.g. a substantially triangular cross-section e.g. by cutting three D-shaped portions off their periphery. This secures open refrigerant passages.

The operation of the differential pressure valve of the fourth embodiment is the same as that of the third embodiment.

Although preferred embodiments of the present invention have been described above, the present invention should not be limited to such particular embodiments. For instance, the orifice 10 may be replaced by an orifice directly formed in the piston 8 such that it extends therethrough. Further, as for the restricted passage, the orifice 10 may be replaced by a groove which is formed in the outer periphery of the piston 8 in the direction of motion thereof. Alternatively, a clearance between the piston 8 and the cylinder which contains the piston 8 in the body 1 may serve as the restricted passage.

## Claims

1. A pilot-operated differential pressure valve for controlling a flow rate of fluid such that a differential pressure of the fluid between an inlet (2) and an outlet (5) for the fluid becomes equal to a differential pressure set by a value of an electric current caused to flow through a solenoid, comprising:
a main valve having a main valve element (7) arranged in a manner opposed from an upstream side of said main valve to a main valve seat (6) formed in a passage (4) between the inlet (2) and the outlet (5),
a piston (8) integrally formed with said main valve element (7) to define a first chamber between said piston and said main valve seat, said first chamber communicating continuously with said inlet, said piston having a restricted passage (9, 10) for communicating between said first chamber and a second chamber formed on an opposite of said first chamber; and
a pilot valve (16, 17) arranged between said second chamber and a third chamber communicating continuously with said outlet, for controlling a piston actuating pressure in said second chamber.

2. The differential pressure valve according to claim 1, wherein said restricted passage (9, 10) comprises an orifice formed through said piston (8) for communicating between said first chamber and said second chamber.

3. The differential pressure valve according to claim 1, wherein said restricted passage (9, 10) comprises a groove formed in the periphery of said piston (8) substantially parallel to the direction in which said piston moves forward and backward.

4. The differential pressure valve according to claim 1, wherein said restricted passage (9, 10) comprises a clearance between said piston and a cylinder movably accommodating said piston (8).

5. The differential pressure valve according to at least claim 1, wherein a differential pressure characteristic-adjusting means is provided for adjusting the differential pressure of the fluid between said inlet (2) and said outlet (5) to a larger value in accordance with an increase of the fluid flow rate than the value of the differential pressure set by the value of electric current caused to flow through a pilot valve actuating solenoid (27).

6. The differential pressure valve according to claim 5, wherein said differential pressure characteristic-adjusting means is a spring constant of a spring (12) for urging said piston (8) in a direction of closing said main valve (6, 7), the value of the differential pressure between said inlet (2) and said outlet (5) being adjusted larger with an increase of the fluid flow rate than the value of the set differential pressure by increasing the spring constant.

7. The differential pressure valve according to claim 5, wherein said differential pressure characteristic-adjusting means is a main valve seat co-acting valve angle θ of said main valve element (7), the value of the differential pressure between said inlet (2) and said outlet (5) being adjusted larger in accordance with an increase of the fluid flow rate than the value of the set differential pressure by decreasing the valve angle,

8. The differential pressure valve according to claim 5, wherein said differential pressure characteristic-adjusting means is the value of a spring constant of a spring (26) contained in said solenoid (27), for urging a pilot valve element (7) of said pilot valve (16, 17) in a pilot valve-closing direction, the value of the differential pressure between said inlet (2) and said outlet (5) being adjusted larger with an increase of the fluid flow rate than the value of the set differential pressure by increasing the spring constant.

9. The differential pressure valve according to claim 5, wherein said differential characteristic-adjusting means is a pilot valve seat co-acting valve angle θ of a pilot valve element (17) of said pilot valve (16, 17), the value of the differential pressure between said inlet (2) and said outlet (5) being adjusted larger with an increase of the fluid flow rate than the value of the set differential pressure by decreasing the valve angle.

10. The differential pressure valve according to claim 1, wherein a flow path-switching mechanism having first and second check valves (34, 35, 38, 39) is arranged between a first port (30) and said first chamber and between a second port (31) and said first chamber, respectively, for permitting the fluid to flow from said first port and said second port to said first chamber, and having third and fourth check valves (41-44) arranged between said first port (30) and said third chamber and between said second port (31) and said third chamber, respectively, for permitting the fluid to flow from said third chamber to said first port and said second port, whereby the fluid can be caused to flow bi-directionally between said first port and said second port.

11. The differential pressure valve according to claim 10, wherein said flow path-switching mechanism is configured such that a first valve element (38) of said first check valve and a second valve element (39) of said second check valve are connected to each other by a first shaft (40), and a third valve element (43) of said third check valve and a fourth valve element (44) of said fourth check valve are connected to each other by a second shaft (45), whereby when the fluid is introduced from said first port (30), pressure of the introduced fluid causes said first check valve to be fully opened to fully close said second check valve in a manner interlocked therewith, and at the same time causes said third check valve to be fully closed to fully open said fourth check valve in a manner interlocked therewith, whereas when the fluid is introduced from said second port (31), pressure of the introduced fluid causes said second check valve to be fully opened to fully close said first check valve in a manner interlocked therewith, and at the same time causes said fourth check valve to be fully closed to fully open said third check valve in a manner interlocked therewith.

12. The differential pressure valve according to claim 1 or 10, wherein said main valve (6, 7), said piston (8), and said pilot valve (16, 17) are arranged on the same axis.

13. Application of the differential pressure valve according to at least on of claims 1 to 12, to a pressure-reducing device in a refrigeration cycle for carbon dioxide as operating refrigerant which is high in the differential pressure and demands flow rate control at a high flow rate.

## Patentansprüche

1. Pilotbetätigtes Differentialdruckventil zum Steuern einer Strömungsrate eines Fluids derart, dass ein Differentialdruck des Fluids zwischen einem Einlass (2) und einem Auslass (5) für das Fluid gleich wird einem Differentialdruck gesetzt durch einen Wert eines elektrischen Stroms, der durch einen Magneten geschickt wird, mit: einem Hauptventil, das ein Hauptventilelement (7) aufweist, das auf eine Weise gegenüberliegend zu einer Stromaufseite des Hauptventils zu einem Hauptventilsitz (6) angeordnet ist, der in einer Passage (4) zwischen dem Einlass (2) und dem Auslass (5) ausgebildet ist,
einen mit dem Hauptventilelement (7) integral ausgebildeten Kolben (8) zum Definieren einer ersten Kammer zwischen dem Kolben und dem Hauptventilsitz, wobei die erste Kammer kontinuierlich mit dem Einlass kommuniziert, der Kolben eine im Querschnitt beschränkte Passage (9, 10) zum Kommunizieren zwischen der ersten Kammer und einer zweiten Kammer aufweist, die an einer gegenüberliegenden Seite der ersten Kammer ausgebildet ist; und
ein zwischen der zweiten Kammer und einer dritten Kammer angeordnetes Pilotventil (16, 17), wobei die dritte Kammer kontinuierlich mit dem Auslass kommuniziert, und das Pilotventil zum Steuern eines Kolbenbetätigungsdrucks in der zweiten Kammer vorgesehen ist.

2. Differentialdruckventil gemäß Anspruch 1,
**dadurch gekennzeichnet,**
**dass** die im Querschnitt beschränkte Passage (9, 10) eine Drosselöffnung umfasst, die durch den Kolben (8) geformt ist zum Kommunizieren zwischen der ersten Kammer und der zweiten Kammer.

3. Differentialdruckventil gemäß Anspruch 1,
**dadurch gekennzeichnet,**
**dass** die im Querschnitt beschränkte Passage (9, 10) eine Nut umfasst, die in der Peripherie des Kolbens (8) substantiell parallel zu der Richtung geformt ist, in welcher sich der Kolben hin- und herbewegt.

4. Differentialdruckventil gemäß Anspruch 1,
**dadurch gekennzeichnet,**
**dass** die im Querschnitt beschränkte Passage (9, 10) einen Zwischenraum zwischen dem Kolben und einem Zylinder umfasst, der den Kolben (8) beweglich aufnimmt.

5. Differentialdruckventil gemäß Anspruch 1,
**dadurch gekennzeichnet,**
**dass** zum Einstellen des Differentialdrucks des Fluids zwischen dem Einlass (2) und dem Auslass (5) auf einen größeren Wert in Abstimmung auf eine Zunahme der Fluidströmungsrate als der Wert des Differentialdrucks wie durch den Wert des elektrischen Stroms gesetzt, der zum Fließen durch einen Betätigungsmagneten (27) eines Pilotventils gebracht wird, Einstellmittel für eine Differentialdruckcharakteristik vorgesehen sind.

6. Differentialdruckventil gemäß Anspruch 5,
**dadurch gekennzeichnet,**
**dass** die Einstellmittel für die Differentialdruckcharakteristik eine Federkonstante einer Feder (12) zum Beaufschlagen des Kolbens (8) in der Richtung zum Schließen des Hauptventils (6, 7) ist, wobei der Wert des Differentialdrucks zwischen dem Einlass (2) und dem Auslass (5) größer eingestellt wird mit einer Zunahme der Fluidströmungsrate als der durch Vergrößern der Federkonstante gesetzte Wert des Differentialdrucks.

7. Differentialdruckventil gemäß Anspruch 5,
**dadurch gekennzeichnet,**
**dass** das Einstellmittel für die Differentialdruckcharakteristik ein Ventilspitzenwinkel (θ) des mit einem Hauptventilsitz zusammenwirkenden Hauptventilelementes (7) ist, wobei der Wert des Differentialdrucks zwischen dem Einlass (2) und dem Auslass (5) auf größer eingestellt wird mit einer Zunahme der Strömungsrate als der Wert des durch Vermindern des Ventilspitzenwinkels gesetzten Differentialdrucks.

8. Differentialdruckventil gemäß Anspruch 5,
**dadurch gekennzeichnet,**
**dass** die Einstellmittel für die Differentialdruckcharakteristik der Wert einer Federkonstanten einer Feder (26) ist, die in dem Magneten (27) enthalten ist zum Beaufschlagen eines Pilotventilelementes (7) des Pilotventils (16, 17) in Pilotventilschließrichtung, wobei der Wert des Differentialdrucks zwischen dem Einlass (2) und dem Auslass (5) größer eingestellt wird mit einer Zunahme der Fluidströmungsrate als der Wert des durch Vergrößern der Federkonstanten gesetzten Differentialdrucks.

9. Differentialdruckventil gemäß Anspruch 5,
**dadurch gekennzeichnet,**
**dass** das Einstellmittel für die Differentialdruckcharakteristik ein Ventilspitzenwinkel (θ) eines mit einen Pilotventilsitz zusammenwirkenden Pilotventilelements (17) des Pilotventils (16, 17) ist, wobei der Wert des Differentialdrucks zwischen dem Einlass (2) und dem Auslass (5) größer eingestellt wird mit einer Zunahme der Fluidströmungsrate als der Wert des durch Vermindern des Ventilspitzenwinkels gesetzten Differentialdrucks.

10. Differentialdruckventil gemäß Anspruch 1,
**dadurch gekennzeichnet,**
**dass** zwischen einem ersten Anschluss (30) und der ersten Kammer und zwischen einem zweiten Anschluss (31) und der ersten Kammer jeweils ein Strömungspfad-Umschaltmechanismus mit ersten und zweiten Rückschlagventilen (34, 35, 38, 39) angeordnet ist, um es dem Fluid zu ermöglichen, von dem ersten Anschluss oder dem zweiten Anschluss zu der ersten Kammer zu strömen, wobei der Mechanismus auch dritte und vierte Rückschlagventile (41, 44) aufweist, die zwischen dem ersten Anschluss (30) und der dritten Kammer und zwischen dem zweiten Anschluss (31) und der dritten Kammer jeweils angeordnet sind, um es dem Fluid zu ermöglichen, von der dritten Kammer zu dem ersten Anschluss oder dem zweiten Anschluss zu strömen, wobei das Fluid dazu gebracht werden kann, zwischen dem ersten Anschluss und dem zweiten Anschluss bidirektional zu fließen.

11. Differentialdruckventil gemäß Anspruch 10,
**dadurch gekennzeichnet,**
**dass** der Strömungspfad-Umschaltmechanismus so konfiguriert ist, dass ein erstes Ventilelement (38) des ersten Rückschlagventils und ein zweites Ventilelement (39) des zweiten Rückschlagventils miteinander durch einen ersten Schaft (40) verbunden sind, und dass ein drittes Ventilelement (43) des dritten Rückschlagventils und ein viertes Ventilelement (44) des vierten Rückschlagventils miteinander durch einen zweiten Schaft (45) verbunden sind, wodurch, sobald Fluid von dem ersten Anschluss (30) eingeführt wird, der Druck des eingeführten Fluids bewirkt, dass das erste Rückschlagventil voll geöffnet und das zweite Rückschlagventil voll geschlossen werden auf eine Weise, in der diese miteinander verblockt sind, und zur selben Zeit bewirkt, dass das dritte Rückschlagventil voll geschlossen und das vierte Rückschlagventil voll geöffnet wird auf eine Weise, in der diese beiden miteinander verblockt sind, wohingegen wenn das Fluid eingeführt wird aus dem zweiten Anschluss (31) der Druck des eingeführten Fluids bewirkt, dass das zweite Rückschlagventil voll geöffnet und das erste Rückschlagventil voll geschlossen wird auf eine Weise, in der diese miteinander verblockt sind, und zur selben Zeit bewirkt wird, dass das vierte Rückschlagventil voll geschlossen wird, um das dritte Rückschlagventil voll zu öffnen in einer Weise, in der diese beiden miteinander verblockt sind.

12. Differentialdruckventil gemäß Anspruch 1 oder 10,
**dadurch gekennzeichnet,**
**dass** das Hauptventil (6, 7), der Kolben (8), und das Pilotventil (16, 17) entlang derselben Achse angeordnet sind.

13. Anwendung des Differentialdruckventils gemäß zumindest einem der Ansprüche 1 bis 12 in einer Druckreduziervorrichtung eines Kühlkreises, der als wirkendes Kältemittel Kohlendioxid enthält, das hohen Differentialdruck hat und eine Strömungsratensteuerung bei einer hohen Strömungsrate bedingt.

## Revendications

1. Soupape à pression différentielle pilotée destinée à contrôler un débit de fluide de telle sorte qu'une pression différentielle du fluide entre une entrée (2) et une sortie (5) du fluide devienne égale à une pression différentielle établie par une valeur d'un courant électrique amené à circuler à travers un solénoïde, comprenant :
une soupape principale ayant un élément de soupape principal (7) disposé de façon opposée depuis un côté amont de ladite soupape principale jusqu'à un siège de soupape principal (6) formé dans un passage (4) entre l'entrée (2) et la sortie (5),
un piston (8) formé en une seule pièce avec ledit élément de soupape principal (7) pour définir une première chambre entre ledit piston et ledit siège de soupape principal, ladite première chambre communiquant de façon continue avec ladite entrée, ledit piston ayant un passage restreint (9, 10) pour communiquer entre ladite première chambre et une deuxième chambre formée sur un opposé de ladite première chambre ; et
une soupape pilote (16, 17) disposée entre ladite deuxième chambre et une troisième chambre communiquant de façon continue avec ladite sortie, pour contrôler une pression de commande du piston dans ladite deuxième chambre.

2. Soupape à pression différentielle selon la revendication 1, **caractérisée en ce que** ledit passage restreint (9, 10) comprend un orifice (5) formé à travers ledit piston (8) pour faire communiquer ladite première chambre et ladite deuxième chambre.

3. Soupape à pression différentielle selon la revendication 1, **caractérisée en ce que** ledit passage restreint (9, 10) comprend une rainure formée dans la périphérie dudit piston (8) sensiblement parallèle à la direction dans laquelle ledit piston se déplace vers l'avant et vers l'arrière.

4. Soupape à pression différentielle selon la revendication 1, **caractérisée en ce que** ledit passage restreint (9, 10) comprend un espace mort entre ledit piston et un cylindre logeant de façon mobile ledit piston (8).

5. Soupape à pression différentielle selon au moins la revendication 1, **caractérisée en ce que** des moyens de réglage caractéristiques de la pression différentielle sont prévus pour régler la pression différentielle du fluide entre ladite entrée (2) et ladite sortie (5) à une plus grande valeur conformément à une augmentation du débit du fluide que la valeur de la pression différentielle établie par la valeur du courant électrique amené à circuler à travers un solénoïde de commande de la soupape pilote (27).

6. Soupape à pression différentielle selon la revendication 5, **caractérisée en ce que** lesdits moyens de réglage caractéristiques de la pression différentielle sont une constante de rappel d'un ressort (12) pour pousser ledit piston (8) dans une direction de fermeture de ladite soupape principale (6, 7), la valeur de la pression différentielle entre ladite entrée (2) et ladite sortie (5) étant réglée plus grande avec une augmentation du débit du fluide que la valeur de la pression différentielle établie en augmentant la constante de rappel.

7. Soupape à pression différentielle selon la revendication 5, **caractérisée en ce que** lesdits moyens de réglage caractéristiques de la pression différentielle sont un angle de soupape θ coopératif du siège de soupape principal dudit élément de soupape principal (7), la valeur de la pression différentielle entre ladite entrée (2) et ladite sortie (5) étant réglée plus grande conformément à une augmentation du débit du fluide que la valeur de la pression différentielle établie en diminuant l'angle de soupape.

8. Soupape à pression différentielle selon la revendication 5, **caractérisée en ce que** lesdits moyens de réglage caractéristiques de la pression différentielle sont la valeur d'une constante de rappel d'un ressort (26) contenu dans ledit solénoïde (27), pour pousser un élément de soupape pilote (7) de ladite soupape pilote (16, 17) dans une direction de fermeture de la soupape pilote, la valeur de la pression différentielle entre ladite entrée (2) et ladite sortie (5) étant réglée plus grande avec une augmentation du débit du fluide que la valeur de la pression différentielle établie en augmentant la constante de rappel.

9. Soupape à pression différentielle selon la revendication 5, **caractérisée en ce que** lesdits moyens de réglage caractéristiques de la pression différentielle sont un angle de soupape θ coopératif du siège de soupape pilote d'un élément de soupape pilote (17) de ladite soupape pilote (16, 17), la valeur de la pression différentielle entre ladite entrée (2) et ladite sortie (5) étant réglée plus grande avec une augmentation du débit du fluide que la valeur de la pression différentielle établie en diminuant l'angle de soupape.

10. Soupape à pression différentielle selon la revendication 1, **caractérisée en ce qu'**un mécanisme de commande de voie d'écoulement ayant une première et une deuxième soupapes de non-retour (34, 35, 38, 39) est disposé entre un premier orifice (30) et ladite première chambre et entre un second orifice (31) et ladite première chambre, respectivement, pour permettre au fluide de circuler depuis ledit premier orifice et ledit second orifice vers ladite première chambre, et ayant une troisième et une quatrième soupapes de non-retour (41-44) disposées entre ledit premier orifice (30) et ladite troisième chambre et entre ledit second orifice (31) et ladite troisième chambre, respectivement, pour permettre au fluide de circuler depuis ladite troisième chambre vers ledit premier orifice et ledit second orifice, moyennant quoi le fluide peut être amené à circuler de façon bidirectionnelle entre ledit premier orifice et ledit second orifice.

11. Soupape à pression différentielle selon la revendication 10, **caractérisée en ce que** ledit mécanisme de commande de voie d'écoulement est configuré de telle sorte qu'un premier élément de soupape (38) de ladite première soupape de non-retour et qu'un deuxième élément de soupape (39) de ladite deuxième soupape de non-retour sont reliés l'un à l'autre par un premier arbre (40), et qu'un troisième élément de soupape (43) de ladite troisième soupape de non-retour et qu'un quatrième élément de soupape (44) de ladite quatrième soupape de non-retour sont reliés l'un à l'autre par un second arbre (45), moyennant quoi lorsque le fluide est introduit à partir dudit premier orifice (30), la pression du fluide introduit amène ladite première soupape de non-retour à être entièrement ouverte pour fermer entièrement ladite deuxième soupape de non-retour de manière verrouillée avec celle-ci, et elle amène au même moment ladite troisième soupape de non-retour à être entièrement fermée pour ouvrir entièrement ladite quatrième soupape de non-retour de manière verrouillée avec celle-ci, alors que quand le fluide est introduit à partir dudit second orifice (31), la pression du fluide introduit amène ladite deuxième soupape de non-retour à être entièrement ouverte pour fermer entièrement ladite première soupape de non-retour de manière verrouillée avec celle-ci, et elle amène au même moment ladite quatrième soupape de non-retour à être entièrement fermée pour ouvrir entièrement ladite troisième soupape de non-retour de manière verrouillée avec celle-ci.

12. Soupape à pression différentielle selon la revendication 1 ou 10, **caractérisée en ce que** ladite première soupape (6, 7), ledit piston (8), et ladite soupape pilote (16, 17) sont disposés sur le même axe.

13. Application de la soupape à pression différentielle selon au moins l'une des revendications 1 à 12, sur un dispositif à réduction de pression dans un cycle de réfrigération pour dioxyde de carbone comme fluide frigorigène utilisé qui a une pression différentielle élevée et requiert un contrôle du débit à un débit élevé.
